# EUROPEAN PATENT APPLICATION

(11) **EP 4 572 516 A1**
(43) Date of publication of application: **18.06.2025**
(21) Application number: 22954363.2
(22) Date of filing: 09.08.2022
(51) Int. Cl.: H04W 76/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/111277
(87) International publication number: WO 2024/031387

(57) **Abstract**

Provided in the embodiments of the present disclosure are an information processing method and apparatus, a communication device, and a storage medium. The information processing method executed by a first-type terminal or a base station comprises: according to a configuration condition of a default downlink part bandwidth (BWP) of the first-type terminal, a configuration condition of a downlink initial BWP of the first-type terminal, and a downlink BWP to which the first-type terminal switches, determining whether to start or restart an inactivity timer.

## Description

### TECHNICAL FIELD

The present disclosure relates to the field of wireless communication technology, but is not limited to the field of wireless communication technology, and in particular, to a method and apparatus for information processing, a communication device, and a storage medium.

### BACKGROUND

In current 3GPP standardization, there is proposed a new reduced capability (RedCap) terminal or a NR-Lite terminal for short. The RedCap terminal is similar to an Internet of Things device in a Long Term Evolution (LTE), and has the characteristics of low cost, simple equipment, low power consumption, or the like.

After the RedCap terminal is introduced, an uplink or initial downlink Bandwidth Part (BWP) may be separately configured for the RedCap terminal in the system information block (SIB). Generally, the terminal may preferentially use the uplink/initial downlink BWP configured for the RedCap terminal.

### SUMMARY

According to embodiments of the present disclosure, there is provided a method and apparatus for information processing, a communication device, and a storage medium.

In a first aspect of the embodiments of the present disclosure, there is provided a method for information processing, where the method is performed by a first-type terminal or a base station, and the method includes:
determining whether to start or restart an inactivity timer according to partial or all of following conditions: a configuration situation of a default downlink bandwidth part (BWP) of the first-type terminal, a configuration situation of an initial downlink BWP of the first-type terminal, and a downlink BWP to which the first-type terminal is handed over.

According to embodiments of the present disclosure, there is provided two kinds of apparatuses for information processing, where the apparatus includes:
a determination module, configured to determine whether to start or restart an inactivity timer according to partial or all of following conditions: a configuration situation of a default downlink bandwidth part (BWP) of a first-type terminal, a configuration situation of an initial downlink BWP of the first-type terminal, and a downlink BWP to which the first-type terminal is handed over.

In a third aspect of the embodiments of the present disclosure, there is provided a communication device, including a processor, a transceiver, a memory, and an executable program stored in the memory and capable of being run by the processor, where when the processor runs the executable program, the method for information processing provided by any technical solution of the first aspect is performed.

In a fourth aspect of the embodiments of the present disclosure, there is provided a computer storage medium, where the computer storage medium stores an executable program, and after the executable program is executed by a processor, the method for information processing provided in the first aspect or the second aspect is able to be implemented.

According to the technical solution provided in the embodiments of the present disclosure, it is determined whether to start or restart the inactivity timer according to the configuration situation of the default downlink BWP of the first-type terminal, the configuration situation of the initial downlink BWP of the first-type terminal, and the downlink BWP to which the first-type terminal is handed over, so that the first-type terminal may not directly start the inactivity timer where there is no default downlink BWP, but may fully consider the configuration situation of the default downlink BWP of the first-type terminal and the configuration situation of the initial downlink BWP of the first-type terminal, and further consider the downlink BWP of the first-type terminal to which the first-type terminal is handed over, where more reference factors are introduced, so that it is more accurate to start or restart the inactivity timer.

It is to be understood that both the foregoing general description and the following detailed description are exemplary and explanatory only and are not restrictions of the embodiments of the present disclosure.

### BRIEF DESCRIPTION OF THE DRAWINGS

The accompanying drawings here, which are incorporated in and constitute a part of this description, illustrate embodiments consistent with the present invention, and, together with the description, serve to explain the principles of embodiments of the present invention.
FIG. 1 is a schematic structural diagram of a wireless communication system shown according to an example embodiment;
FIG. 2 is a schematic flowchart of a method for information processing shown according to an example embodiment;
FIG. 3 is a schematic flowchart of a method for information processing shown according to an example embodiment;
FIG. 4 is a schematic flowchart of a method for information processing shown according to an example embodiment;
FIG. 5A is a schematic flowchart of a method for information processing shown according to an example embodiment;
FIG. 5B is a schematic flowchart of a method for information processing shown according to an example embodiment;
FIG. 5C is a schematic flowchart of a method for information processing shown according to an example embodiment;
FIG. 6 is a schematic structural diagram of an apparatus for information processing shown according to an example embodiment;
FIG. 7 is a schematic structural diagram of a first-type terminal shown according to an example embodiment;
FIG. 8 is a schematic structural diagram of a base station shown according to an example embodiment.

### DETAILED DESCRIPTION

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the embodiments of the present invention. By contrast, they are merely examples of apparatuses and methods consistent with some aspects of the embodiments of the present invention.

The terms used in the embodiments of the present disclosure are merely for the purpose of describing particular embodiments, and are not intended to limit the embodiments of the present disclosure. The singular forms of "a" "said" and "the" as used in the present disclosure are also intended to include plural forms, unless the context clearly indicates other meanings. It should also be understood that the term "and/or" used in the context refers to and includes any or all possible combinations of one or more of the associated listed items.

It should be understood that although the terms "first", "second", "third", etc., may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the word "if" as used here may be interpreted as "at the time...", "when..." or "in response to determining...".

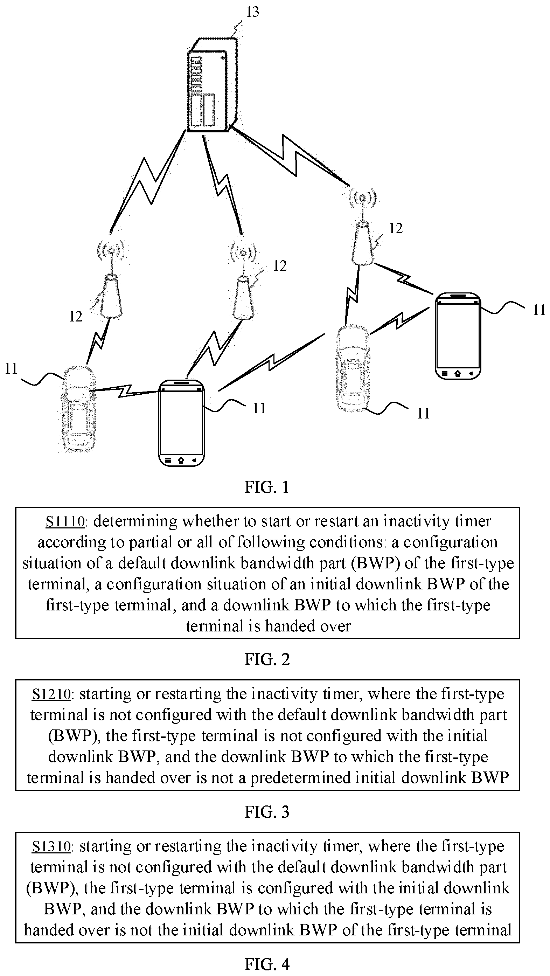

Referring to FIG. 1, FIG. 1 shows a schematic structural diagram of a wireless communication system according to an embodiment of the present disclosure. As shown in FIG. 1, the wireless communication system is a communication system based on a cellular mobile communication technology, and the wireless communication system may include several terminals 11 and several access devices 12.

Among them, the terminal 11 may be a device that provides speech and/or data connectivity to a user. The terminal 11 may communicate with one or more core networks via a radio access network (RAN). The terminal 11 may be an Internet of Things (IoT) terminal, such as a sensor device, a mobile phone (or referred to as a cellular phone), and a computer having an IoT terminal, which may be a fixed, portable, pocket-sized, handheld, computer-built-in, or vehicle-mounted apparatus, such as a station (STA), a subscriber unit, a subscriber station, a mobile station, a mobile, a remote station, an access point, a remote terminal, an access terminal, a user terminal, a user agent, a user device, or user equipment. Alternatively, the terminal 11 may also be a device in an unmanned aerial vehicle. Alternatively, the terminal 11 may be a vehicle-mounted device, for example, it may be a trip computer having a wireless communication function, or a wireless communication device externally connected to a trip. Alternatively, the terminal 11 may be a roadside device, for example, it may be a street lamp, a signal lamp, another roadside device, or the like, that has a wireless communication function.

The access device 12 may be a network side device in a wireless communication system. Among them, the wireless communication system may be a 4th generation mobile communication (4G) system, which is also referred to as a Long Term Evolution (LTE) system. Alternatively, the wireless communication system may be a 5G system, which is also referred to as a new radio (NR) system or a 5G NR system. Alternatively, the wireless communication system may be a next-generation system of the 5G system. Among them, the access network in the 5G system may be referred to as a new generation-radio access network (NG-RAN). Alternatively, the wireless communication system may be an MTC system.

Among them, the access device 12 may be an evolved access device (eNB) used in the 4G system. Alternatively, the access device 12 may also be an access device (gNB) that adopts a centralized distributed architecture in the 5G system. When the access device 12 adopts a centralized distributed architecture, it usually includes a central unit (CU) and at least two distributed units (DU). A protocol stack for the Packet Data Convergence Protocol (PDCP) layer, the Radio Link Control (RLC) layer, and the Media Access Control (MAC) layer is provided in the centralized unit, and a protocol stack for the Physical (PHY) layer is provided in the distribution unit, which is not limited in the embodiments of the present disclosure.

The wireless connection may be established between the access device 12 and the terminal 11 through a wireless air interface. In different embodiments, the wireless air interface is a wireless air interface based on the 4th generation mobile communication network technology (4G) standard. Alternatively, the wireless air interface is a wireless air interface based on the 5th generation mobile communication network technology (5G) standard; for example, the wireless air interface is a new radio. Alternatively, the wireless air interface may also be a wireless air interface based on a next-generation mobile communication network technology standard of 5G.

As shown in FIG. 2, according to an embodiment of the present disclosure, there is provided a method for information processing, where the method is performed by a first-type terminal or a base station, and the method includes the following step.

In S1110, it is determined whether to start or restart an inactivity timer according to partial or all of following conditions: a configuration situation of a default downlink bandwidth part (BWP) of the first-type terminal, a configuration situation of an initial downlink BWP of the first-type terminal, and a downlink BWP to which the first-type terminal is handed over.

For example, S1110 may include determining whether to start or restart the inactivity timer according to the configuration situation of the default downlink BWP of the first-type terminal, the configuration situation of the initial downlink BWP of the first-type terminal, and the downlink BWP to which the first-type terminal is handed over.

The device for performing the method for information processing may be a first-type terminal and/or a base station.

The first-type terminal may be a terminal that supports a less bandwidth than a second-type UE. For example, the first-type terminal may be a RedCap terminal. The second-type terminal may be a legacy terminal. For example, the second-type terminal may be an enhanced mobile broadband (eMBB) terminal.

The RedCap terminal may include one or two antennas, and therefore, the bandwidth supported by the RedCap terminal is small.

For another example, the first-type terminal may be a terminal that does not support carrier aggregation, and the second-type terminal may be a terminal that supports carrier aggregation. For example, since the first-type terminal does not support carrier aggregation, the first-type terminal does not have a dormant BWP. The second-type terminal may have a dormant BWP.

The default downlink BWP may also be referred to as a default downlink BWP, and may be used for downlink transmission of the first-type terminal.

The configuration situation of the default downlink BWP of the first-type terminal may include that the first-type terminal is configured with the default downlink BWP, or not configured with the default downlink BWP.

The initial downlink BWP of the first-type terminal may be an initial downlink BWP dedicated to the first-type terminal, i.e., an initialDownlinkBWP-Redcap. The initial downlink BWP of the first-type terminal may be used for initial access of the first-type terminal and/or downlink transmission after access. If it is not configured with the initial downlink BWP dedicated to the first-type terminal, i.e., an initialDownlinkBWP-Redcap, the first-type terminal will use an initial downlink BWP (initialDownlinkBWP) shared with the second-type terminal (for example, an eMBB user).

The configuration situation of the initial downlink BWP of the first-type terminal may also include that the first-type terminal is configured with the initial downlink BWP, or the first-type terminal is not configured with the initial downlink BWP.

In some embodiments, a bandwidth of the default downlink BWP of the first-type terminal is less than or equal to a bandwidth of the initial downlink BWP of the first-type terminal.

The downlink BWP to which the first-type terminal is handed over may be the default downlink bandwidth part (BWP), the initial downlink BWP of the first-type terminal, or another downlink BWP. Here, the downlink BWP to which the first-type terminal is handed over is a downlink BWP to which the MAC layer (that is, the MAC entity) of the first-type terminal is handed over after receiving the indication information for BWP handover.

For another example, a bandwidth of another downlink BWP may be less than or equal to the bandwidth of the initial downlink BWP of the first-type terminal.

The downlink BWP to which the first-type terminal is handed over may be a BWP on which the first-type terminal is currently working. If the bandwidth of the downlink BWP to which the first-type terminal is handed over is greater, the terminal needs to scan a frequency band with a larger bandwidth, so that the power consumption is higher.

The inactivity timer may be used to trigger the first-type terminal to hand over to a BWP with a smaller bandwidth, so as to reduce power consumption of the terminal.

The downlink BWP to which the first-type terminal is handed over is an active downlink BWP of the first-type terminal. The started or restarted inactivity timer is an inactivity timer associated with the active downlink BWP of the first-type terminal.

In the embodiment of the present disclosure, S1110 may include:
determining whether it is needed to start or restart the inactivity timer based on the configuration situation of the default downlink BWP of the first-type terminal, the configuration situation of the initial downlink BWP of the first-type terminal, and the situation whether the downlink BWP to which the first-type terminal is handed over is the default downlink BWP or the initial downlink BWP of the first-type terminal.

The "start" here may include initially starting or restarting the inactivity timer, and the started or restarted inactivity timer here is an inactivity timer configured for the downlink BWP to which the first-type terminal is handed over.

In some embodiments, more than one downlink BWP of the first-type terminal may share one inactivity timer, or different downlink BWPs may be configured with different inactivity timers.

In some embodiments, the method further includes: when the inactivity timer expires, determining whether downlink BWP fallback is needed, according to the configuration situation of the default downlink BWP of the first-type terminal and the configuration situation of the initial downlink BWP of the first-type terminal; and
when downlink BWP fallback is needed, determining a target downlink BWP according to the configuration situation of the default downlink BWP of the first-type terminal and the configuration situation of the initial downlink BWP of the first-type terminal; and
falling back to the target downlink BWP.

The initial downlink BWP to which it is fallen back, may be an initial downlink BWP configured for the first-type terminal (i.e., an initialDownlinkBWP-Redcap), or a predetermined initial downlink BWP (i.e., an initialDownlinkBWP) when the initial downlink BWP configured for the first-type terminal is not configured. In this case, the predetermined initial downlink BWP (i.e., an initialDownlinkBWP) is an initial downlink BWP shared by the first-type terminal and the second-type terminal.

For example, when the downlink BWP to which the first-type terminal is handed over is not the default downlink BWP of the first-type terminal or the initial downlink BWP of the first-type terminal, and it is configured with at least one of the initial downlink BWP of the first-type terminal and the default downlink BWP of the first-type terminal, it is determined that BWP fallback is needed. The target downlink BWP for fallback may be the BWP with a minimum bandwidth to which the first-type terminal can be handed over.

If it is determined that there is no need to perform BWP fallback, the first-type terminal maintains to work on the downlink BWP to which the first-type terminal is handed over.

Certainly, the foregoing are merely examples, and the specific implementation is not limited to the foregoing examples.

The method for information processing may be performed by the base station and/or the base station simultaneously. Therefore, according to this manner, the terminal may determine the downlink BWP to which the first-type terminal is handed over for working itself, and may monitor the downlink transmission on the downlink BWP to which the first-type terminal is handed over; and, the base station may determine the downlink BWP to which the first-type terminal of the terminal is handed over, and may send the downlink transmission on the downlink BWP to which the first-type terminal is handed over.

As shown in FIG. 3, according to an embodiment of the present disclosure, there is provided a method for information processing, where the method is performed by a first-type terminal or a base station, and the method includes the following step.

In S1210, the inactivity timer is started or restarted, where the first-type terminal is not configured with the default downlink bandwidth part (BWP), the first-type terminal is not configured with the initial downlink BWP, and the downlink BWP to which the first-type terminal is handed over is not the predetermined initial downlink BWP.

In some embodiments, the initialDownlinkBWP included in the predetermined initial downlink BWP may be at least used by the second-type terminal, but the first-type terminal is not configured with the initial downlink BWP, and then, the predetermined initial downlink BWP (i.e., the initialDownlinkBWP) may also be used by the first-type terminal. The second-type terminal is different from the first-type terminal. The second-type terminal here may be any terminal with any supported bandwidth greater than that of the first-type terminal.

That is, the predetermined initial downlink BWP may be used by the first-type terminal. That is, the predetermined initial downlink BWP is not specific to the second-type terminal, but the predetermined initial downlink BWP is shared by the first-type terminal and the second-type terminal.

For example, the predetermined initial downlink BWP may be configured by the base station through a SIB or a master information block (MIB).

For example, a bandwidth of the predetermined initial downlink BWP is greater than or equal to a bandwidth of the initial downlink BWP of the first-type terminal.

If the first-type terminal is not configured with the default downlink BWP and the initial downlink BWP of the first-type terminal, the downlink BWP to which the first-type terminal is handed over may not able to be the default downlink BWP or the initial downlink BWP of the first-type terminal that is not configured. In this case, if the downlink BWP to which the first-type terminal is handed over is not the predetermined initial downlink BWP either, it indicates that the downlink BWP to which the first-type terminal is handed over is another downlink active BWP with a relatively larger bandwidth. Therefore, the inactivity timer needs to be started or restarted, so that the terminal may fall back to the downlink BWP with a relatively smaller bandwidth when the inactivity timer expires, thus reducing the power consumption of the terminal.

For example, in the embodiments of the present disclosure, after the inactivity timer expires, it is determined that the first-type terminal needs to fall back, and the target BWP for fallback may be the predetermined initial downlink BWP.

In some embodiments, the method further includes:
determining not to start and not to restart the inactivity timer, where the first-type terminal is not configured with the default downlink BWP, the first-type terminal is not configured with the initial downlink BWP, and the downlink BWP to which the first-type terminal is handed over is the predetermined initial downlink BWP.

As shown in FIG. 4, according to an embodiment of the present disclosure, there is provided a method for information processing, where the method is performed by a first-type terminal or a base station, and the method includes the following step.

In S1310, the inactivity timer is started or restarted, where the first-type terminal is not configured with the default downlink BWP, the first-type terminal is configured with the initial downlink BWP, and the downlink BWP to which the first-type terminal is handed over is not the initial downlink BWP of the first-type terminal.

In the embodiments of the present disclosure, if the first-type terminal is configured with the initial downlink BWP, in a case that the default downlink BWP is not configured, it may be considered that the initial downlink BWP of the first-type terminal is a downlink BWP with a minimum bandwidth among all downlink BWPs configured for the first-type terminal. In this case, if the downlink BWP to which the first-type terminal is handed over is not the initial downlink BWP of the first-type terminal, the inactivity timer is started or restarted. Therefore, when the inactivity timer expires, the first-type terminal may fall back to the initial downlink BWP of the first-type terminal. Here, the first-type terminal falling back to the initial downlink BWP of the first-type terminal, refers to that the active downlink BWP of the first-type terminal is handed over to the initial downlink BWP of the first-type terminal.

In some embodiments, the method further includes the following step.

In S1320, it is determined not to start and not to restart the inactivity timer, where the first-type terminal is not configured with the default downlink BWP, the first-type terminal is configured with the initial downlink BWP, and the downlink BWP to which the first-type terminal is handed over is the initial downlink BWP of the first-type terminal.

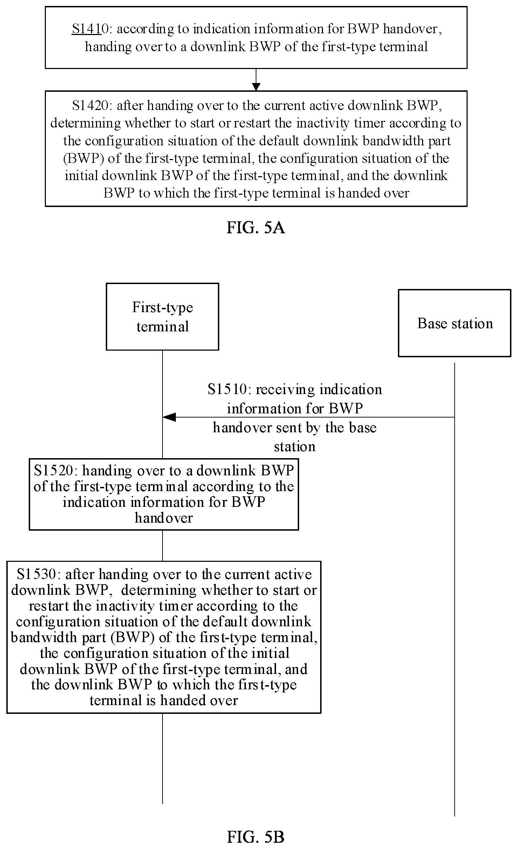

As shown in FIG. 5A, according to an embodiment of the present disclosure, there is provided a method for information processing, where the method is performed by a first-type terminal or a base station, and the method includes the following steps.

In S1410, it is handed over to the downlink BWP of the first-type terminal according to indication information for BWP handover.

In S1420, after handing over to the downlink BWP to which the first-type terminal is handed over, it is determined whether to start or restart the inactivity timer according to the configuration situation of the default downlink bandwidth part (BWP) of the first-type terminal, the configuration situation of the initial downlink BWP of the first-type terminal, and the downlink BWP to which the first-type terminal is handed over.

The indication information for BWP handover may be carried in Downlink Control Information (DCI) or a Media Access Control (MAC) Control Element (CE) or a Radio Resource Control (RRC) message.

The indication information for BWP handover may include information about a BWP to which the first-type terminal needs to be handed over. The information about the BWP after handover includes but is not limited to an identifier of the BWP, etc.

As shown in FIG. 5B, according to an embodiment of the present disclosure, there is provided a method for information processing, where the method is performed by a first-type terminal, and the method includes following steps.

In S1510, indication information for BWP handover sent by a base station is received.

In S1520, it is handed over to a downlink BWP of the first-type terminal according to the indication information for BWP handover.

In S1530, after handing over to the downlink BWP to which the first-type terminal is handed over, it is determined whether to start or restart the inactivity timer according to the configuration situation of the default downlink bandwidth part (BWP) of the first-type terminal, the configuration situation of the initial downlink BWP of the first-type terminal, and the downlink BWP to which the first-type terminal is handed over.

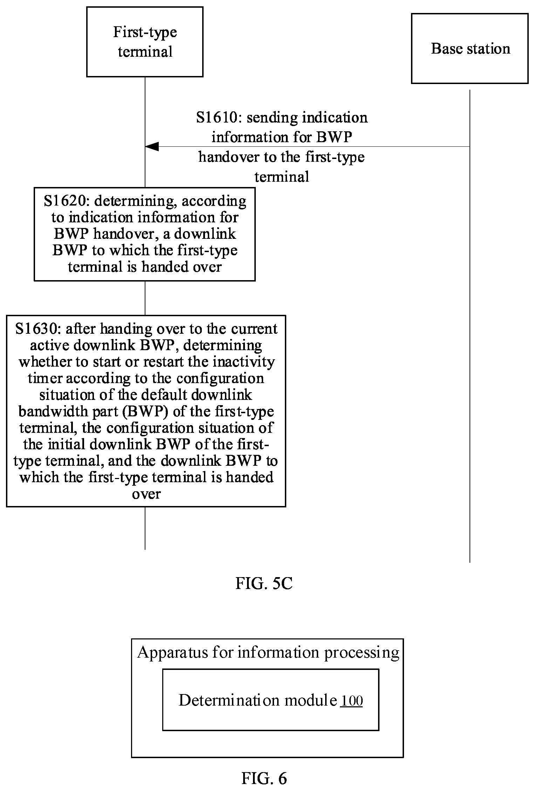

As shown in FIG. 5C, according to an embodiment of the present disclosure, there is provides a method for information processing, where the method is performed by a base station, and the method includes following steps.

In S1610, indication information for BWP handover is sent to a first-type terminal.

In S1620, a downlink BWP to which the first-type terminal is handed over is determined according to indication information for BWP handover.

In S1630, after handing over to the downlink BWP to which the first-type terminal is handed over, it is determined whether to start or restart the inactivity timer according to the configuration situation of the default downlink bandwidth part (BWP) of the first-type terminal, the configuration situation of the initial downlink BWP of the first-type terminal, and the downlink BWP to which the first-type terminal is handed over.

In some embodiments, the method for information processing may further include starting or restarting the inactivity timer, where the first-type terminal is configured with the default downlink BWP, and the downlink BWP to which the first-type terminal is handed over is not the default downlink BWP.

In some embodiments, handover of the downlink (DL) BWP of the first-type terminal may not be indicated by the indication information of BWP handover, but may be performed when a trigger event is detected. For example, if the first-type terminal has no uplink and downlink transmission for a long period of time, it may be considered that the trigger event is detected. Certainly, the foregoing is merely an example, and the specific implementation is not limited to this.

In some embodiments, the method further includes:
after the activated inactivity timer expires, determining a BWP to which the first-type terminal falls back, where a bandwidth of the BWP to which the first-type terminal falls back is less than an active downlink BWP corresponding to the inactivity timer.

If the inactivity timer is started, it indicates that the downlink BWP to which the first-type terminal is currently handed over, i.e., the active BWP of the first-type terminal, is not the BWP with the minimum bandwidth to which the first-type terminal is able to be handed over. Therefore, when the inactivity timer expires, the BWP to which the first-type terminal falls back is determined; and after fallback of the BWP of the first-type terminal, the power consumption of the first-type terminal may be saved.

If the first-type terminal is configured with the default downlink BWP, the BWP after fallback is the default downlink BWP of the first-type terminal.

If the first-type terminal is not configured with the default downlink BWP and is configured with the initial downlink BWP of the first-type terminal, the BWP after fallback is the initial downlink BWP of the first-type terminal.

If the first type is not configured with the default downlink BWP, not configured with the initial downlink BWP of the first-type terminal, and configured with the predetermined initial downlink BWP, the BWP after fallback is the predetermined initial downlink BWP.

If the first type is not configured with the default downlink BWP, not configured with the initial downlink BWP of the first-type terminal, and not configured with the predetermined initial downlink BWP, the first-type terminal does not perform BWP fallback.

The manner of not performing BWP fallback includes not starting or restarting the inactivity timer, or maintaining the current active BWP of the first-type terminal after the inactivity timer expires.

According to embodiments of the present disclosure, there is provided a working manner of an inactivity timer for the BWP configured for a specific-type terminal, where the specific-type terminal is a RedCap-type terminal. If the indication information for BWP handover is received, the specific-type terminal needs to start or restart the inactivity timer (IAT) for the BWP, which may be specifically as follows.

The base station may send indication information to the first-type terminal, where the indication information may be used to indicate a downlink BWP to which the terminal is handed over, and the downlink BWP to which the first-type terminal is handed over is a BWP other than the target BWP to which it is handed over after the IAT expires.

The indication message for BWP handover may be carried by DCI for BWP handover.

The target BWP to which it is handed over after the IAT expires is the initial downlink BWP configured for the specific-type terminal or the initial downlink BWP of an old user.

If the indication information for BWP handover is received, the active BWP to which the terminal is handed over is not the predetermined initial downlink BWP, and the terminal needs to start or restart the IAT timer.

The initial downlink BWP used by the second-type terminal may be configured through the SIB1 or configured through the MIB. If the network device does not configure the default initial downlink BWP for the specific-type terminal, and if the network device configures the initial BWP for the specific-type terminal (i.e., the initialDownlinkBWP-RedCap), the received indication information for BWP handover indicates that the active BWP to which the first-type terminal is handed over is not the initial downlink BWP of the first-type terminal, and then the first-type terminal needs to start or restart the indication information IAT timer.

According to an embodiment of the present disclosure, there is provided a method for information processing, which may include following.

If the second-type terminal receives Physical Downlink Control Channel (PDCCH) information for BWP handover, the MAC entity of the second-type terminal hands over to an activate downlink BWP. If the second-type terminal is configured with a default downlink BWP (the DefaultDownlinkBWP-Id indicating the default downlink BWP), and if the MAC entity of the second-type terminal hands over to a default downlink BWP that is not the DefaultDownlinkBWP-Id and is not the dormant DL BWP represented by the dormantBWP-Id, the inactivity timer associated with the active DL BWP is started or restarted. That's because, for the second-type terminal, whether the downlink BWP to which the MAC entity of the second-type terminal is handed over is a dormant BWP or not, and then it is further determined whether the inactivity timer needs to be started or restarted. Only when the MAC entity is handed over to a DL BWP that is not the initial downlink BWP (initialDownlinkBWP) and is not represented by the dormantBWP-Id, the inactivity timer associated with the active DL BWP is started or restarted.

Alternatively,
If the first-type terminal receives Physical Downlink Control Channel (PDCCH) information for BWP handover, the MAC entity of the first-type terminal hands over to the activate downlink BWP. If the default downlink BWP (the DefaultDownlinkBWP-Id indicating the default downlink BWP) is configured, and the MAC entity is handed over to a default DL BWP that is not the DefaultDownlinkBWP-Id, the inactivity timer associated with the active DL BWP is started or restarted. For the first-type terminal, since the first-type terminal does not support carrier aggregation, there is no need to determine whether the downlink BWP to which the MAC entity is handed over is a dormant BWP or not.

Alternatively,
The second-type terminal receives Physical Downlink Control Channel (PDCCH) information for BWP handover, and the MAC entity of the second-type terminal is handed over to the activate downlink BWP. If the default downlink BWP indicated by the DefaultDownlinkbwp-Id is not configured, and the MAC entity is handed over to a non-initial downlink BWP (the initial downlink BWP being the initial downlink BWP indicated by the initialDownlinkBWP-Id), and the downlink BWP to which the MAC entity is handed over is not the DL BWP represented by the dormantBWP-Id, the inactivity timer associated with the active DL BWP is started or restarted.

Alternatively,
The first-type terminal receives Physical Downlink Control Channel (PDCCH) information for BWP handover, and the MAC entity of the first-type terminal is handed over to the activate downlink BWP. If the default downlink BWP is not configured (that is, the downlink BWP indicated by the DefaultDownlinkBWP-Id is not configured), the initial downlink BWP of the RedCap terminal (initialDownlinkBWP-RedCap) is not configured, and the downlink BWP to which the MAC entity is handed over is not the initial downlink BWP (initialDownlinkBWP), the inactivity timer associated with the active DL BWP is started or restarted.

Alternatively,
The first-type terminal receives Physical Downlink Control Channel (PDCCH) information for BWP handover, and the MAC entity of the first-type terminal is handed over to the activate downlink BWP. If the DefaultDownlinkBWP-Id is not configured, and the initial downlink BWP of the RedCap terminal (initialDownlinkBWP-RedCap) is configured, then the downlink BWP to which the MAC entity is handed over is not the initialDownlinkBWP-RedCap, and the inactivity timer associated with the active DL BWP is started or restarted.

The downlink BWP to which the MAC entity is handed over after receiving the command of BWP handover is the foregoing active DL BWP of the terminal.

As shown in FIG. 6, according to an embodiment of the present disclosure, there is provided an apparatus for information processing, where the apparatus includes determination module 110.

The determination module 110 is configured to determine whether to start or restart an inactivity timer according to partial or all of following conditions: a configuration situation of a default downlink bandwidth part (BWP) of the first-type terminal, a configuration situation of an initial downlink BWP of the first-type terminal, and a downlink BWP to which the first-type terminal is handed over.

For example, the determination module 110 may be configured to determine whether to start or restart the inactivity timer according to the configuration situation of the default downlink bandwidth part (BWP) of the first-type terminal, the configuration situation of the initial downlink BWP of the first-type terminal, and the downlink BWP to which the first-type terminal is handed over.

The apparatus for information processing provided according to the embodiments of the present disclosure may be the foregoing first-type terminal and/or base station.

In some embodiments, the apparatus for information processing may further include a storage module. The storage module may be connected to the determination module. The storage module may be configured to store information about the configuration situation of the default downlink bandwidth part (BWP) of the first-type terminal, the configuration situation of the initial downlink BWP of the first-type terminal, and the downlink BWP to which the first-type terminal is handed over, etc.

In some embodiments, the determination module may be a program module, and after the program module is executed by the processor, the foregoing operations can be implemented.

In some other embodiments, the determination module may be a software and hardware integration module, the software and hardware integration module includes but is not limited to a programmable array, and the programmable array may include a field programmable array and/or a complex programmable array.

In some embodiments, the determination module may further include a pure hardware module, and the pure hardware module includes but is not limited to an application specific integrated circuit.

In some embodiments, the determination module 110 is configured to start or restart the inactivity timer, where the first-type terminal is not configured with the default downlink bandwidth part (BWP), the first-type terminal is not configured with the initial downlink BWP, and the downlink BWP to which the first-type terminal is handed over is not a predetermined initial downlink BWP.

In some embodiments, the determination module 110 is configured to start or restart the inactivity timer, where the first-type terminal is not configured with the default downlink bandwidth part (BWP), the first-type terminal is configured with the initial downlink BWP, and the downlink BWP to which the first-type terminal is handed over is not the initial downlink BWP of the first-type terminal.

In some embodiments, the first-type terminal includes a reduced capability (RedCap) terminal.

In some embodiments, the apparatus further includes:
a handover module, configured to hand over to a downlink BWP of the first-type terminal according to indication information for BWP handover.

The determination module 110 is configured to determine, after it is handed over to the downlink BWP to which the first-type terminal is handed over, whether to start or restart the inactivity timer according to the configuration situation of the default downlink bandwidth part (BWP) of the first-type terminal, the configuration situation of the initial downlink BWP of the first-type terminal, and the downlink BWP to which the first-type terminal is handed over.

According to an embodiment of the present disclosure, there is provided a communication device, including:
a memory, configured to store an instruction executable by a processor; and
the processor, separately connected to the memory;
where the processor is configured to perform the method for information processing provided in any of the foregoing technical solutions.

The processor may include various types of storage mediums. The storage medium is a non-transitory computer storage medium, and after the communication device is powered down, the information on the storage medium can be memorized and stored continuously.

Here, the communication device includes a first-type terminal or a base station.

The processor may be connected to the memory by using a bus or the like, and is configured to read an executable program stored in the memory, such as one or more of the methods shown in FIG. 2 to FIG. 4 and FIG. 5A to FIG. 5C.

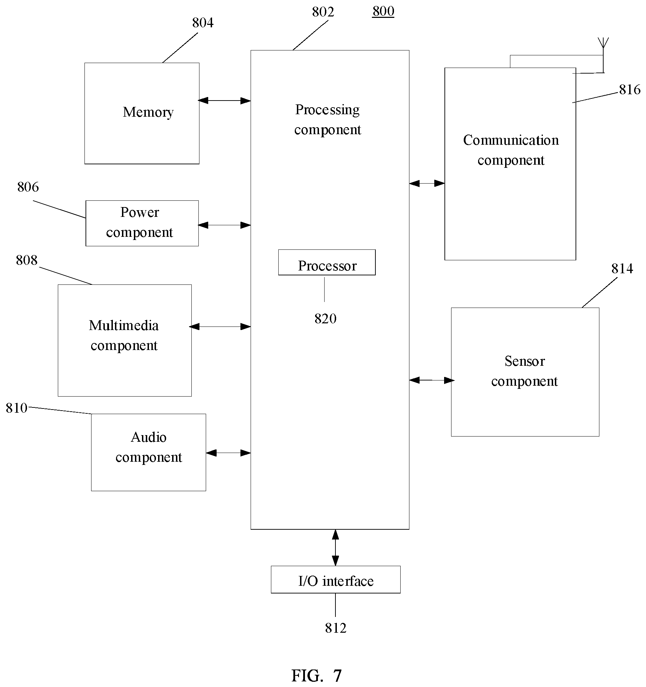

FIG. 7 is a block diagram of a first-type terminal 800 according to an example embodiment. For example, the first-type terminal 800 may be a mobile phone, a computer, a digital broadcast user device, a message transceiver device, a game console, a tablet device, a medical device, a fitness device, a personal digital assistant, or the like.

Referring to FIG. 7, the first-type terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls overall operations of the first-type terminal 800, such as operations associated with display, telephone calls, data communications, camera operations, and recording operations. The processing component 802 may include one or more processors 820 to execute instructions to generate all or part of the steps of the above methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the first-type terminal 800. Examples of such data include instructions for any application or method operating on the first-type terminal 800, contact data, phonebook data, messages, pictures, videos, etc. The memory 804 may be implemented by any type of volatile or nonvolatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 806 provides power to various components of the first-type terminal 800. The power component 806 may include a power management system, one or more power supplies, and other components associated with generation, management, and distribution of power for the first-type terminal 800.

The multimedia component 808 includes a screen providing an output interface between the first-type terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense a boundary of a touch or slide action, but also detect a duration and pressure associated with the touch or slide action. In some embodiments, the multimedia component 808 includes a front camera and/or a rear camera. When the first-type terminal 800 is in an operation mode, such as a photographing mode or a video mode, the front-facing camera and/or the rear-facing camera may receive external multimedia data. Each of the front camera and the rear camera may be a fixed optical lens system or have focal length and optical zoom capability.

The audio component 810 is configured to output and/or input audio signals. For example, the audio component 810 includes a microphone (MIC) configured to receive an external audio signal when the first-type terminal 800 is in an operation mode, such as a call mode, a recording mode, and a speech recognition mode. The received audio signal may be further stored in the memory 804 or transmitted via the communication component 816. In some embodiments, the audio component 810 further includes a speaker to output audio signals.

The I/O interface 812 provides an interface between the processing component 802 and the peripheral interface module, which may be a keyboard, a click wheel, a button, or the like. The button may include, but is not limited to, a home button, a volume button, a starting button, and a locking button.

The sensor component 814 includes one or more sensors to provide status assessments of various aspects of the first-type terminal 800. For example, the sensor component 814 may detect an on/off state of the device 800, and relative positioning of components; for example, the components may be a display and a keypad of the first-type terminal 800. The sensor component 814 may also detect the position change of the first-type terminal 800 or of one component of the first-type terminal 800, the presence or absence of contact by the user with the first-type terminal 800, the orientation or acceleration/deceleration of the first-type terminal 800, and the temperature change of the first-type terminal 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may further include an acceleration sensor, a gyroscope sensor, a magnetic sensor, a pressure sensor, or a temperature sensor.

The communication component 816 is configured to facilitate wired or wireless communication between the first-type terminal 800 and other devices. The first-type terminal 800 may access a wireless network based on a communication standard, such as WiFi, 2G, or 3G, or a combination of them. In an example embodiment, the communication component 816 receives a broadcast signal or broadcast related information from an external broadcast management system via a broadcast channel. In an example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the first-type terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the methods described above.

In an example embodiment, there is further provided a non-transitory computer-readable storage medium including an instruction, for example, the memory 804 including an instruction. The instruction may be executed by the processor 820 of the first-type terminal 800 to generate the foregoing method. For example, the non-transitory computer-readable storage medium may be a ROM, a random access memory (RAM), a CD-ROM, a magnetic tape, a floppy disk, an optical data storage device, or the like.

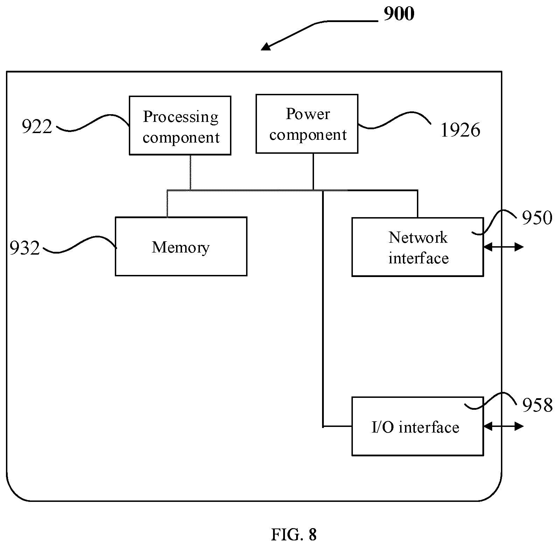

As shown in FIG. 8, an embodiment of the present disclosure shows a structure of a base station. For example, the base station 900 may be provided as a network side device. The communication device may be various network elements such as the foregoing access network element and/or network function.

Referring to FIG. 8, the base station 900 includes a processing component 922 that further includes one or more processors, and memory resources represented by the memory 932 for storing instructions, such as applications, that may be executed by the processing component 922. The application program stored in the memory 932 may include one or more modules each corresponding to a set of instructions. In addition, the processing component 922 is configured to execute instructions to perform any method applied to the access device by the foregoing methods, for example, for example, one or more of the methods shown in FIG. 2 to FIG. 4 and FIG. 5A to FIG. 5C.

The base station 900 may also include a power component 926 configured to perform power management of the base station 900, a wired or wireless network interface 950 configured to connect the base station 900 to a network, and an input/output (I/O) interface 958. The base station 900 is operable based on an operating system stored in the memory 932, such as Windows Server TM, Mac OS XTM, UnixTM, LinuxTM, FreeBSDTM, or the like.

According to an embodiment of the present disclosure, there is provided a computer storage medium, where the computer storage medium stores an executable program, and after the executable program is executed by a processor, one or more of the methods for information processing provided by any of the foregoing technical solutions can be implemented, for example, one or more of the methods shown in FIG. 2 to FIG. 4, and FIG. 5A to FIG. 5C.

The computer storage medium may include, but is not limited to, a non-transitory computer-readable storage medium.

Other embodiments of the present invention will be apparent to those skilled in the art from consideration of the description and practice of the invention disclosed here. The present disclosure is intended to cover any variations, uses, or adaptations of the present invention following the general principles of the present invention and including such common general knowledge and conventional technical means in the art not disclosed in the present disclosure. It is intended that the description and examples should be considered as exemplary only, with a true scope and spirit of the present invention being indicated by the following claims.

It will be appreciated that the present invention is not limited to the precise structure that has been described above and illustrated in the accompanying drawings, and that various modifications and changes may be made without departing from the scope of the present invention. It is intended that the scope of the invention should be limited only by the appended claims.

## Claims

1. A method for information processing, performed by a first-type terminal or a base station, and comprising:
determining whether to start or restart an inactivity timer according to partial or all of following conditions: a configuration situation of a default downlink bandwidth part (BWP) of the first-type terminal, a configuration situation of an initial downlink BWP of the first-type terminal, and a downlink BWP to which the first-type terminal is handed over.

2. The method according to claim 1, wherein determining whether to start or restart the inactivity timer according to partial or all of the following conditions: the configuration situation of the default downlink bandwidth part (BWP) of the first-type terminal, the configuration situation of the initial downlink BWP of the first-type terminal, and the downlink BWP to which the first-type terminal is handed over, comprises:
starting or restarting the inactivity timer, wherein the first-type terminal is not configured with the default downlink bandwidth part (BWP), the first-type terminal is not configured with the initial downlink BWP, and the downlink BWP to which the first-type terminal is handed over is not a predetermined initial downlink BWP.

3. The method according to claim 1 or 2, wherein determining whether to start or restart the inactivity timer according to partial or all of the following conditions: the configuration situation of the default downlink bandwidth part (BWP) of the first-type terminal, the configuration situation of the initial downlink BWP of the first-type terminal, and the downlink BWP to which the first-type terminal is handed over, further comprises:
starting or restarting the inactivity timer, wherein the first-type terminal is not configured with the default downlink bandwidth part (BWP), the first-type terminal is configured with the initial downlink BWP, and the downlink BWP to which the first-type terminal is handed over is not the initial downlink BWP of the first-type terminal.

4. The method according to claim 1, wherein the first-type terminal comprises a reduced capability (RedCap) terminal.

5. The method according to any one of claims 1 to 4, wherein,
determining whether to start or restart the inactivity timer according to partial or all of the following conditions: the configuration situation of the default downlink bandwidth part (BWP) of the first-type terminal, the configuration situation of the initial downlink BWP of the first-type terminal, and the downlink BWP to which the first-type terminal is handed over, further comprises:
after determining, according to indication information for BWP handover, the downlink BWP to which the first-type terminal is handed over, determining whether to start or restart the inactivity timer according to the configuration situation of the default downlink bandwidth part (BWP) of the first-type terminal, the configuration situation of the initial downlink BWP of the first-type terminal, and the downlink BWP to which the first-type terminal is handed over.

6. The method according to any one of claims 1 to 5, wherein the method further comprises:
after the started inactivity timer expires, determining a BWP to which the first-type terminal falls back, wherein a bandwidth of the BWP to which the first-type terminal falls back is less than an active downlink BWP corresponding to the inactivity timer.

7. An apparatus for processing information, wherein the apparatus comprises:
a determination module, configured to determine whether to start or restart an inactivity timer according to partial or all of following conditions: a configuration situation of a default downlink bandwidth part (BWP) of a first-type terminal, a configuration situation of an initial downlink BWP of the first-type terminal, and a downlink BWP to which the first-type terminal is handed over.

8. The apparatus according to claim 7, wherein the determination module is configured to start or restart the inactivity timer, wherein the first-type terminal is not configured with the default downlink bandwidth part (BWP), the first-type terminal is not configured with the initial downlink BWP, and the downlink BWP to which the first-type terminal is handed over is not a predetermined initial downlink BWP.

9. The apparatus according to claim 8 or 9, wherein the determination module is configured to start or restart the inactivity timer, wherein the first-type terminal is not configured with the default downlink bandwidth part (BWP), the first-type terminal is configured with the initial downlink BWP, and the downlink BWP to which the first-type terminal is handed over is not the initial downlink BWP of the first-type terminal.

10. The apparatus according to claim 7, wherein the first-type terminal comprises a reduced capability (RedCap) terminal.

11. The apparatus according to any one of claims 7 to 10, wherein the apparatus further comprises:
a handover module, configured to hand over to a downlink BWP of the first-type terminal according to indication information for BWP handover;
wherein, the determination module is configured to, after handing over to the downlink BWP to which the first-type terminal is handed over, determine whether to start or restart the inactivity timer according to the configuration situation of the default downlink bandwidth part (BWP) of the first-type terminal, the configuration situation of the initial downlink BWP of the first-type terminal, and the downlink BWP to which the first-type terminal is handed over.

12. The apparatus according to any one of claims 7 to 11, wherein the apparatus further comprises:
a fallback module, configured to determine, after the started inactivity timer expires, a BWP to which the first-type terminal falls back, wherein a bandwidth of the BWP to which the first-type terminal falls back is less than an activate downlink BWP corresponding to the inactivity timer.

13. A communication device, comprising a processor, a transceiver, a memory, and an executable program stored in the memory and capable of being run by the processor, wherein when the processor runs the executable program, the method according to any one of claims 1 to 6 is performed.

14. A computer storage medium, wherein the computer storage medium stores an executable program, and after the executable program is executed by a processor, the method according to any one of claims 1 to 6 is able to be implemented.
